# FASCICULE DE BREVET EUROPEEN

(11) **EP 0 462 032 B1**
(45) Date de publication et mention de la délivrance du brevet: **17.01.1996**
(21) Numéro de dépôt: 91420190.0
(22) Date de dépôt: 11.06.1991
(51) Int. Cl.: C08K 13/02

(54) **Procédé de préparation d'empâtage en extrudeuse double-vis pour compositions RTV SiH/SiVi**
Verfahren zur Herstellung von RTV SiH/SiVi-Paste mit einem Doppelschraubenextruder
Method for preparation of RTV SiH/SiVi paste in a double-screw extruder

(30) Priorité: 13.06.1990 FR 9007609
(43) Date de publication de la demande: 18.12.1991
(73) Titulaire: RHONE-POULENC CHIMIE, F-92408 Courbevoie Cédex (FR)
(72) Inventeur: Le Blanc, Loic, F-69600 Oullins (FR); Pagliari, René, F-69970 Marennes (FR)
(74) Mandataire: Trolliet, Maurice

(56) Documents cités:
- EP-A- 0 172 678
- EP-A- 0 305 032
- PATENT ABSTRACTS OF JAPAN, vol. 13, no. 362 (C-625)[3710], 14 août 1989; & JP-A-1 121 329 (TEIJIN LTD) 15-05-1989

## Description

La présente invention concerne un procédé de préparation d'un empâtage utilisable dans des compositions vulcanisables par réaction dite de polyaddition, c'est-à-dire par réaction de réticulation entre un polydiorganosiloxane comprenant dans sa molécule au moins deux groupements ≡Si-CH=CH₂ (appelés groupements SiVi) et un polysiloxane comprenant dans sa molécule au moins deux groupements ≡SiH. Ces compositions, une fois vulcanisées (réticulées) forment des élastomères silicones. Ces compositions peuvent vulcaniser à la température ambiante ou à des températures plus élevées (inférieures généralement à 200°C).

L'utilisation de telles compositions est connue et ces compositions sont généralement à deux emballages (bi-composantes), c'est-à-dire commercialisées en deux parties devant être mélangées au moment de l'emploi. Le catalyseur préféré utilisé pour la réticulation de ces compositions est le plus généralement un composé complexe du platine tel que par exemple celui préparé à partir de l'acide chloroplatinique et de divinyl 1,3 tétraméthyl 1133 disiloxane, selon le brevet USP 3 814 730. D'autres complexes du platine sont décrits dans les brevets USP 3 159 601, 3 159 662 et 3 220 972.

Dans de telles compositions à deux emballages, un des emballages comprend par exemple un empâtage (à base de polysiloxane à fonctions SiVi et de silice) auquel on a ajouté sous agitation au moins un polysiloxane à fonction SiH ; on obtient ainsi la partie A. L'autre emballage (partie B) comprend par exemple en plus de l'empâtage défini ci-dessus, le catalyseur de la réaction de polyaddition.

De telles compositions peuvent aussi être présentées dans un seul emballage (elles sont dites dans ce cas monocomposantes) et elles comprennent alors de façon connue dans le même emballage les composants des parties A + B ci-avant et un inhibiteur du platine tel que ceux décrits par exemple dans les brevets USP 3 445 420 (alcools acétyléniques) ou 4 061 609 (hydroperoxydes) permettant aux compositions de ne vulcaniser qu'une fois sorties de l'emballage (à l'air) ou après avoir été chauffées légèrement.

Dans les procédés de l'art antérieur permettant l'obtention des compositions décrites ci-avant, on commence générale par préparer, en pétrin malaxeur, un empâtage à partir du polysiloxane à groupement SiVi, de silice, d'eau et d'hexaméthyldisilazane et on doit malaxer le mélange pendant une période assez longue pouvant aller par exemple, comme cela est décrit dans EP-A-0 305 032, de 15 minutes à 2 heures.

Un avantage du procédé selon la présente invention est de raccourcir fortement le temps de préparation de cet empâtage, le temps de préparation du mélange avec le procédé selon la présente invention étant inférieur à 15 minutes, généralement entre 20 secondes et 10 minutes, de préférence entre 30 secondes et 5 minutes.

Un autre avantage du procédé selon la présente invention résulte du fait qu'il est possible de réduire la quantité d'hexaméthyldisilazane utilisé par rapport aux procédés en discontinu (par "batches") de l'art antérieur.

Un autre avantage du procédé selon notre présente invention provient du fait qu'il est possible d'obtenir des élastomères présentant une haute résistance à la déchirure, Rd (supérieure à 25 KN/m) à partir d'un empâtage ayant une viscosité initiale à 25°C inférieure à 50 000 mPa.s, et du fait que cet empâtage se conserve très bien pendant 6 mois à la température ambiante, c'est-à-dire que sa viscosité à 25°C ne dépasse pas 80 000 mPa.s. Avec les procédés de l'art antérieur (par batches), pour obtenir des élastomères ayant des Rd supérieures à 20 KN/m, il est nécessaire de préparer des empâtages ayant des viscosités à 25°C bien supérieures à 50 000 mPa.s. Pendant leur conservation (6 mois à température ambiante), ces empâtages (obtenus par "batches") et les parties A correspondantes subissent une évolution les amenant à avoir de très hautes viscosités, par exemple de l'ordre de 100 000 mPa.s pour la partie A, et supérieure à 500 000 mPa.s pour l'empâtage.

Il a maintenant été trouvé, et c'est ce qui fait l'objet de la présente invention, un procédé de préparation d'un empâtage se déroulant pendant un temps de préparation fortement raccourci, ledit empâtage ayant une viscosité initiale inférieure à 50 000 mPa.s, étant utilisable dans des compositions vulcanisables par réaction dite de polyaddition et permettant ainsi l'obtention d'élastomères silicones présentant une résistance à la déchirure Rd supérieure à 25 KN/m, caractérisé par les points (i) à (5i) suivants :
(i) on injecte en continu et simultanément dans une extrudeuse double-vis, au moins en quatre endroits différents :
   a) une huile polydiorganosiloxane dont la viscosité à 25°C est inférieure à 250 000 mPa.s et comprenant au moins deux groupements ≡Di-CH=CH₂ par molécule,
   b) de l'eau,
   c) de la silice de précipitation ou de combustion ayant une surface spécifique comprise entre 50 et 400 m/g,
   d) un polysilazane liquide à une température de 23°C et à une pression de 1010,8.10 Pa, ayant pour formule générale : 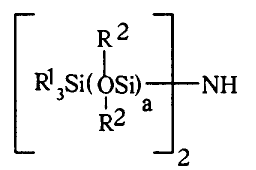 dans laquelle R¹, R et R³, identiques ou différents, représentent un groupement hydrocarboné monovalent en C1 à C4 et a est un nombre entier compris entre 0 et 50 ;
2i) l'huile a) est injectée dans l'extrudeuse à l'endroit le plus en amont, tandis que le polyzilazane d) est introduit en aval dans l'extrudeuse après que les constituants a), b) et c) aient déjà été introduits dans l'extrudeuse ;
3i) le polysilazane d), qui est préférablement un disilazane, choisi parmi le divinyltétraméthyldisilazane et l'hexaméthyldisilazane, est introduit dans l'extrudeuse en deux endroits distincts HMDZ1 et HMDZ2, HMDZ2 étant situé en aval de HMDZ1 ;
4i) les vis de l'extrudeuse ne comportent pas d'éléments de malaxage entre l'endroit où est introduite la silice et l'endroit HDMZ1 ;
5i) le temps de séjour moyen dans l'extrudeuse de la masse des constituants est compris entre 20 secondes et 10 minutes, préférablement entre 30 secondes et 5 minutes.

L'extrudeuse double-vis utilisée dans le procédé de préparation d'empâtage selon la présente invention est un appareil comprenant deux vis disposées l'une à côté de l'autre et dont les axes longitudinaux sont parallèles, ces deux vis étant de préférence corotatives et mutuellement raclées, c'est-à-dire que ces deux vis tournent dans le même sens. A titre de variante les axes longitudinaux des vis peuvent être concourrants et dans ce cas les vis sont obligatoirement contrarotatives. Ces extrudeuses double-vis sont bien connues et parmi celles-ci on peut citer, notamment, les extrudeuses : ZSK et CONTINUA de la Société WERNER et PFLEIDERER ainsi que leur dérivé KOMPIPLAST KP, l'appareil MPC/V de la Société BAKER-PERKINS, les appareils de la Société LEITSTRITZ, l'appareil ZE ... A de la Société BERTORFF, l'extrudeuse double-vis de la Société CLEXTRAL. Ces extrudeuses sont la plupart du temps des appareils modulaires, tant au niveau des fourreaux (parties de l'appareil entourant les vis) que des vis, c'est-à-dire que l'utilisateur procède lui-même à la conception de son extrudeuse à partir des éléments de vis et de fourreaux que les fabricants mettent à sa disposition par leur catalogue. L'emploi d'une extrudeuse double-vis est déjà connu dans un procédé de mélangeage d'une charge siliceuse dans un organoplysiloxane (cf. en particulier EP-A-0 178 678) et aussi dans un procédé de renforcement d'un polymère thermoplastique par une charge (cf. en particulier JP-A-1-121329).

Pour la mise en oeuvre du procédé de préparaiton d'empâtage selon la présente invention, l'extrudeuse double-vis a un rapport UD compris entre 20 et 45, de préférence entre 25 et 35, L représentant la longueur de chaque vis et D leur diamètre, exprimés dans la même unité. D'autre part, la vitesse circonférentielle des vis de l'extrudeuse est comprise entre 0,2 et 1,2 m/s (mètre par seconde), de préférence entre 0,6 et 1 m/s.

L'huile a) polydiorganosiloxane utilisée pour la mise en oeuvre du procédé de préparaiton d'empâtage selon la présente invention comprend au moins deux groupements ≡Si-CH=CH₂ par molécule. Sa viscosité à 25°C est généralement inférierue à 250 000 mPa.s, de préférence comprise entre 100 et 50 000 mPa.s. Cette huile comprend essentiellement des motifs R₂SiO, les symboles R, identiques ou différents, représentant notamment des groupements cycloalcoyles en C₁ à C₄ éventuellement halogénés, des groupements aryles en C₅ à C₆ éventuellement substitués ou halogénés.

A titre de groupements :
- alcoyles, on peut citer notamment les groupements méthyle, éthyle, propyle, butyle,
- alcoyles halogénés, on peut citer le 3-3-3 trifluoropropyle,
- cycloalcoyles, on peut citer le cyclohexyle,
- aryle, on peut citer le groupement phényle.

De préférence au moins 85 % des groupements R représentent des groupements méthyles.

Les silices utilisées dans le procédé selon la présente invention peuvent être des silices de précipitation, mais on utilise plus avantageusement des silices de combustion.

Le polysilazane utilisé dans le procédé selon la présente invention est avantageusement un disilazane dans lequel a = 0, et choisi par exemple parmi le divinyltétraméthyldisilazane ou de préférence l'hexaméthyldisilazane.

Pour la mise en oeuvre du procédé de préparation d'un empâtage selon la présente invention, on injecte, comme indiqué ci-avant, en continu et simultanément dans l'extrudeuse double-vis :
- l'huile a) polydiorganosiloxane,
- l'eau b),
- la silice c) et
- le polysilazane d),
au moins en quatre endroits différents le long de l'extrudeuse, l'huile a) étant injectée dans l'extrudeuse à l'endroit le plus en amont, tandis que le polysilazane est introduit en aval dans l'extrudeuse après que les constituants a), b) et c) aient déjà été introduits dans l'extrudeuse.

De plus, il est nécessaire, comme indiqué ci-avant, d'introduire le polysilazane dans l'extrudeuse en deux endroits différents situés le long de l'extrudeuse appelés HMDZ1 et HMDZ2, HMDZ2 étant situé en aval de HMDZ1. De préférence, au premier endroit, c'est-à-dire à l'endroit appelé HDMZ1, est injecté en continu 35 à 70 % en poids de la quantité totale de polysilazane mise en oeuvre dans le procédé selon la présente invention, le restant de la quantité de polysilazane étant introduit dans l'extrudeuse à l'endroit HMDZ2.

De plus, il est nécessaire encore, comme indiqué ci-avant, que, dans le procédé selon la présente invention, les vis ne comprennent pas d'éléments de "malaxage" entre les points d'introduction de la silice et d'introduction HMDZ1 du polysilazane. On veut dire par celà que les vis, entre les points d'introduction de la silice et HMDZ1 ne comprennent pas d'éléments constituant une discontinuité géométrique de nature à modifier le taux de remplissage ou à générer un gradient de pression axial important.

Dans le procédé selon la présente invention, pour en poids 100 parties de l'huile a), on introduit dans l'extrudeuse double-vis :
- 0,5 à 8 parties d'eau b),
- 20 à 80 parties de silice c),
- 3 à 20 parties de polysilazane d).

L'eau peut être injectée dans l'extrudeuse double-vis en un endroit d'injection indépendant, ou éventuellement elle peut être injectée au même endroit que l'huile a) après que l'huile a) et l'eau b) aient été préalablement mélangées ou non.

L'eau peut éventuellement être comprise dans la silice.

L'empâtage obtenu avec le procédé selon la présente invention est dévolatilisé pour en chasser l'eau et les éléments volatils.

Cette dévolatisation peut être effectuée juste avant que l'empâtage sorte de l'extrudeuse double-vis ou après sa sortie de l'extrudeuse, par exemple par passage dans une autre extrudeuse ou en pétrin-malaxeur.

Cette dévolatilisation est faite à une température généralement comprise entre 50 et 200°C. Lorsqu'elle est réalisée dans l'extrudeuse on opère par exemple sous une pression absolue de 1,33 à 266.10Pa, tandis qu'en pétrin-malaxeur on opère, par exemple, à la pression atmosphérique sous courant d'azote.

Pour préparer une composition polyorganosiloxane, conduisant à des élastomères silicones, on ajoute à l'empâtage préalablement dévolatisé, obtenu avec le procédé selon la présente invention :
- un organopolysiloxane comrpenant au moins deux, de préférence trois, gorupements SiH par molécule,
- une quantité catalytiquement efficace d'un catalyseur d'un métal du groupe du platine,
- éventuellement une huile diorganopolysiloxane bloquée à chaque extrémité par des groupes diorganovinylsiloxy, comme par exemple des groupements diméthylvinylsiloxy,
- éventuellement une charge, comme par exemple du quartz broyé.

L'exemple 2 donné ci-après montre que le procédé selon l'invention de préparation d'empâtage permet l'obtention de l'empâtage ayant la plus faible augmentation de viscosité après vieillissement et conduisant à l'obtention d'élastomères ayant les meilleures résistances à la déchirure.

### CONTRE-EXEMPLE 1

Le procédé de préparaiton est mis en oeuvre dans une extrudeuse double-vis fabriquée par la Société LEISTRITZ. Les vis ont un diamètre de 34 mm et le rapport UD est égal à 35, L représentant la longueur utile de chaque vis, c'est-à-dire la longueur au contact de laquelle circule au moins l'huile a) mieux décrite ci-après. Les vis tournent à 400 tours par minute et le débit de l'extrudeuse est choisi à 9,4 kg par heure.

Les produits utilisés pour l'obtention de l'empâtage sont introduits en continu et simultanément dans l'extrudeuse dans les proportions suivantes, en poids :
a) 100 parties d'une huile ayant une succession de groupements diméthylsiloxy dans sa chaîne bloquée à chaque extrémité par un groupement diméthylvinylsiloxy, de viscosité 600 mPa.s, le pourcentage en poids de groupement vinyle étant de 0,4 %,
b) 4 parties d'eau,
c) 43 parties de silice A300, silice de combustion, commercialisée par la Société DEGUSSA ayant une surface spécifique de 300 m/g,
d) 8,6 parties d'hexaméthyldisilazane.

L'huile a) et l'eau b) sont injectées séparément mais au même endroit dans l'extrudeuse, à l'endroit le plus en amont sur l'extrudeuse, la silice c) est introduite en aval par rapport à l'endroit d'introduction de l'huile a) et l'hexaméthyldisilazane est introduit en aval sur l'extrudeuse, par rapport à l'endroit où est introduite la silice, en un seul endroit appelé HMDZ1. Les vis n'ont aucun élément de malaxage entre le point d'introduction de la silice et l'endroit d'introduction HMDZ1 de l'hexaméthyldisilazane. Il doit être bien entendu que l'endroit par où sort l'empâtage de l'extrudeuse correspond à la partie avale de l'extrudeuse.

Le temps de séjour moyen dans l'extrudeuse de la masse est de 1 minute et 40 secondes.

L'empâtage obtenu est dévolatilisé 3 heures dans un pétrin malaxeur à 150°C, sous une pression absolue de 100.10Pa.

On ajoute à 100 parties de l'empâtage dévolatilisé, en poids :
- 8,5 parties d'un mélange de deux huiles polydiméthylsiloxane, l'une de viscosité 50 mPa.s (représentant 65 % du mélange) et l'autre 300 mPa.s, et contenant respectivement 2 atomes-gramme/kg et 1,7 atome-gramme/kg d'hydrogène engagé dans des groupements SiH. Ainsi est obtenue la partie A.

On prépare d'autre part la partie B, en ajoutant à 100 parties du même empâtage, en poids:
- du platine catalytique sous forme de complexe organométallique du type LAMOREAUX (selon USP 3 220 972) à raison de 80 mg de Pt par Kg de partie B,
- une huile complexante du platine et ayant une fonction de ralentisseur, comme le divinyltétraméthyldisiloxane.

Le mélange de ces deux parties, à raison de 10 parties de B pour 90 parties de A, réticule à la température ambiante. Après 24 heures de réticulation on mesure la dureté SHORE A (DSA) selon la norme ASTMD 2240 et la résistance à la déchirure (Rd) selon la norme ASTMD D 624 des élastomères obtenus.

Ces résultats et les viscosités de l'empâtage à la sortie de l'extrudeuse et après vieillissement sont consignés dans le tableau ci-après.

### EXEMPLE 2 :

Cet exemple est réalisé dans les mêmes conditions et avec les mêmes quantités de produits que celles du contre-exemple 1, mais l'hexaméthyldisilazane est introduit dans l'extrudeuse double-vis en deux endroits distincts le long de l'extrudeuse, l'endroit d'introduction le plus en amont étant appelé HMDZ1 et l'endroit d'introduction en aval par rapport à HMDZ1 est appelé HMDZ2. Dans cet exemple 45,3 % de la quantité totale d'hexaméthyldisilazane utilisée est introduite dans l'extrudeuse double-vis au point HMDZ1.

Les vis n'ont aucun élément de malaxage entre le point d'introduction de la silice et le point d'introduction HMDZ1 de l'hexaméthyldisilazane.

Les propriétés mécaniques des élastomères obtenus à partir de la composition préparée comme dans le contre-exemple 1 (mais avec l'empâtage de l'exemple 2 présent) se trouvent dans le tableau ci-après.

### CONTRE-EXEMPLE 3:

Ce contre-exemple est réalisé dans les mêmes conditions que celles de l'exemple 2, à la seule différence que les vis comprennent des éléments de malaxage entre le point d'introduction de la silice et le point d'introduction d'HMDZ1 de l'hexaméthyldisilazane.

Les propriétés mécaniques des élastomères obtenus à partir de la composition préparée comme à l'exemple 2, (mais avec l'empâtage du contre-exemple 3 présent) se trouvent dans le tableau ci-après.

| | Contre-exemple 1 | Exemple 2 | Contre-exemple 3 |
|---|---|---|---|
| Hexaméthyldisilazane introduit en HMDZ1 (parties en poids) | 8,6 | 3,9 | 3,9 |
| Hexaméthyldisilazane introduit en HMDZ2 (parties en poids) | 0 | 4,7 | 4,7 |
| Viscosité initiale "empâtage" (mPa.s) | 148 000 | 49 000 | 62 200 |
| Viscosité "empâtage" après vieillissement 140 h / 100°C (mPa.s) | 198 000 | 82 000 | 85 000 |
| DSA | 26 | 26 | 26 |
| Rd (kN/m) | 30,3 | 27,6 | 21,4 |

## Revendications

1. Procédé de préparation d'un empâtage se déroulant pendant un temps de préparation fortement raccourci, ledit empâtage ayant une viscosité initiale inférieure à 50 000 mPa.s, étant utilisable dans des compositions vulcanisables par réaction dite de polyaddition et permettant ainsi l'obtention d'élastomères silicones présentant une résistance à la déchirure Rd supérieure à 25 KN/m, caractérisé par les points (i) à (5i) suivants :
(i) on injecte en continu et simultanément dans une extrudeuse double-vis, au moins en quatre endroits différents :
a) une huile polydiorganosiloxane dont la viscosité à 25°C est inférieure à 250 000 mPa.s et comprenant au moins deux groupements ≡Si-CH=CH₂ par molécule,
b) de l'eau,
c) de la silice de précipitation ou de combustion ayant une surface spécifique comprise entre 50 et 400 m/g,
d) un polysilazane liquide à une température de 23°C et à une pression de 1010,8.10 Pa, ayant pour formule générale : 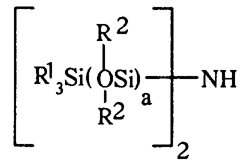 dans laquelle R¹, R et R³, identiques ou différents, représentent un groupement hydrocarboné monovalent en C1 à C4 et a est un nombre entier compris entre 0 et 50;
2i) l'huile a) est injectée dans l'extrudeuse à l'endroit le plus en amont, tandis que le polyzilazane d) est introduit en aval dans l'extrudeuse après que les constituants a), b) et c) aient déjà été introduits dans l'extrudeuse ;
3i) le polysilazane d) est introduit dans l'extrudeuse en deux endroits distincts HMDZ1 et HMDZ2, HMDZ2 étant situé en aval de HMDZ1 ;
4i) les vis de l'extrudeuse ne comportent pas d'éléments de malaxage entre l'endroit où est introduite la silice et l'endroit HDMZ1 ;
5i) le temps de séjour moyen dans l'extrudeuse de la masse des constituants est compris entre 20 secondes et 10 minutes.

2. Procédé selon la revendication 1, caractérisé en ce que le polysilazane d) est un disilazane.

3. Procédé selon la revendication 2, caractérisé en ce que le disilazane est choisi notamment parmi le divinyltétraméthyldisilazane et l'hexaméthyldisilazane.

4. Procédé selon l'une quelconque des revendications 1 à 3, caractérisé en ce que 35 à 70 % en poids de la quantité de polysilazane est introduite en HMDZ1, le restant de la quantité de polysilazane étant introduit en HMDZ2 situé en aval de HMDZ1.

5. Procédé selon l'une quelconque des revendications précédentes, caractérisé en ce que le temps de séjour moyen de la masse des constituants dans l'extrudeuse est compris entre 30 secondes et 5 minutes.

6. Procédé selon l'une quelconque des revendications précédentes, caractérisé en ce que pour, en poids, 100 parties de l'huile a), on injecte dans l'extrudeuxse :
- 0,5 à 8 parties d'eau b),
- 20 à 80 parties de silice c),
- 3 à 20 parties de polysilazane d).

7. Procédé selon l'une quelconque des revendications précédentes, caractérisé en ce que l'huile a) a une viscosité à 25°C comprise entre 100 et 50 000 mPa.s.

8. Procédé selon l'une quelconque des revendications précédentes, caractérisé en ce que le rapport L/D est compris entre 20 et 45, L représentant la longueur de chaque vis de l'extrudeuse et D leur diamètre, exprimés dans la même unité.

9. Procédé selon la revendication 8, caractérisé en ce que le rapport L/D est compris entre 25 et 35.

10. Procédé selon l'une quelconque des revendications précédentes, caractérisé en ce que la vitesse circonférentielle des vis de l'extrudeuse est comprise entre 0,2 et 1,2 m/s.

11. Procédé selon la revendication 10, caractérisé en ce que la vitesse circonférentielle des vis de l'extrudeuse est comprise entre 0,6 et 1 m/s.

12. Procédé selon l'une quelconque des revendications précédentes, caractérisé en ce que l'empâtage obtenu est dévolatilisé.

## Patentansprüche

1. Verfahren zur Herstellung einer Paste, das während einer stark gekürzten Herstellungszeit abläuft, wobei die Paste eine Anfangsviskosität unter 50 000 mPa.s hat, die in Zusammensetzungen verwendbar ist, die durch eine sogenannte Polyadditionsreaktion vulkanisierbar sind, und so die Erzielung von Silikonelastomeren erlauben, die einen Einreißwiderstand Rd über 25 KN/m aufweisen, gekennzeichnet durch die folgenden Punkte (i) bis (5i):
(i) man spritzt kontinuierlich und gleichzeitig in einen Doppelschneckenextruder mindestens an vier verschiedenen Stellen ein:
a) ein Polydiorganosiloxanöl, dessen Viskosität bei 25 °C unter 250 000 mPa.s ist, und das mindestens zwei Gruppierungen ≡Si-CH=CH₂ pro Molekül enthält,
b) Wasser,
c) Fällungs- oder Verbrennungssiliziumdioxid mit einer spezifischen Oberfläche zwischen 50 und 400 m/g,
d) ein flüssiges Polysilazan bei einer Temperatur von 23 °C und einem Druck von 1010,8.10 Pa mit der allgemeinen Formel: 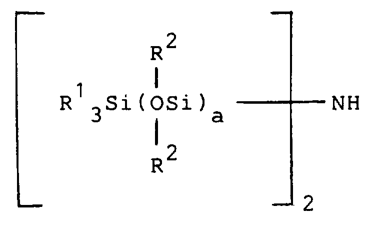 worin R¹, R und R³, die identisch oder verschieden sind, eine einwertige C₁-C₄-Kohlenwasserstoffgruppe darstellen, und a eine ganze Zahl zwischen 0 und 50 ist;
(2i) das Öl a) wird in dem Extruder an der am meisten stromaufwärts gelegenen Stelle eingespritzt, während das Polysilazan d) stromabwärts in den Extruder, nachdem die Bestandteile a), b) und c) bereits in den Extruder eingeführt worden sind, eingeführt wird;
(3i) das Polysilazan d) wird in den Extruder an zwei unterschiedlichen Stellen, HMDZ1 und HMDZ2, eingeführt, wobei HMDZ2 stromabwärts von HMDZ1 liegt;
(4i) die Schnecken des Extruders enthalten keine Knetelemente zwischen der Stelle, wo das Siliziumdioxid eingeführt wird, und der Stelle, wo das HMDZ1 eingeführt wird;
(5i) die mittlere Verweilzeit der Masse der Bestandteile in dem Extruder beträgt zwischen 20 Sekunden und 10 Minuten.

2. Verfahren gemäß Anspruch 1, dadurch gekennzeichnet, daß das Polysilazan d) ein Disilazan ist.

3. Verfahren gemäß Anspruch 2, dadurch gekennzeichnet, daß das Disilazan besonders ausgewählt ist unter Divinyltetramethyldisilazan und Hexamethyldisilazan.

4. Verfahren gemäß einem der Ansprüche 1 bis 3, dadurch gekennzeichnet, daß 35 Gew.-% bis 70 Gew.-% der Polysilazanmenge in HMDZ1 eingeführt wird, und der Rest der Polysilazanmenge in HMDZ2 eingeführt wird, das stromabwärts von HMDZ1 gelegen ist.

5. Verfahren gemäß einem der vorhergehenden Ansprüche, dadurch gekennzeichnet, daß die mittlere Verweilzeit der Masse der Bestandteile in dem Extruder zwischen 30 Sekunden und 5 Minuten beträgt.

6. Verfahren gemäß einem der vorhergehenden Ansprüche, dadurch gekennzeichnet, daß man für 100 Gew.-Teile des Öls a) in den Extruder einspritzt:
- 0,5 bis 8 Teile Wasser b),
- 20 bis 80 Teile Siliziumdioxid c),
- 3 bis 20 Teile Polysilazan d).

7. Verfahren gemäß einem der vorhergehenden Ansprüche, dadurch gekennzeichnet, daß das Öl a) eine Viskosität bei 25 °C zwischen 100 und 50 000 mPa.s hat.

8. Verfahren gemäß einem der vorhergehenden Ansprüche, dadurch gekennzeichnet, daß das Verhältnis L/D zwischen 20 und 45 liegt, wobei L die Länge jeder Schnecke des Extruders und D deren Durchmesser, ausgedrückt in der gleichen Einheit, darstellt.

9. Verfahren gemäß Anspruch 8, dadurch gekennzeichnet, daß das Verhältnis L/D zwischen 25 und 35 liegt.

10. Verfahren gemäß einem der vorhergehenden Ansprüche, dadurch gekennzeichnet, daß die Umfangsgeschwindigkeit der Schnecken des Extruders zwischen 0,2 und 1,2 m/s beträgt.

11. Verfahren gemäß Anspruch 10, dadurch gekennzeichnet, daß die Umfangsgeschwindigkeit der Schnecken des Extruders zwischen 0,6 und 1 m/s beträgt.

12. Verfahren gemäß einem der vorhergehenden Ansprüche, dadurch gekennzeichnet, daß die erhaltene Paste von flüchtigen Stoffen befreit wird.

## Claims

1. Process for the preparation of a dough, carried out in a greatly shortened preparation time, the said dough having an initial viscosity of less than 50 000 mPa s, being capable of being employed in compositions which can be vulcanized by a so-called polyaddition reaction and thus making it possible to obtain silicone elastomers exhibiting a tear resistance Rt greater than 25 kN/m, characterized by the following points (i) to (v):
(i) the following are injected continuously and simultaneously into a twin-screw extruder in at least four different places:
a) - a polydiorganosiloxane oil with a viscosity at 25°C of less than 250 000 mPa s, and containing at least two ≡Si-CH=CH₂ groups per molecule,
b) - water,
c) - precipitated or pyrogenic silica which has a specific surface of between 50 and 400 m/g,
d) - a polysilazane which is liquid at a temperature of 23°C and a pressure of 1010.8x10 Pa, which has the general formula: 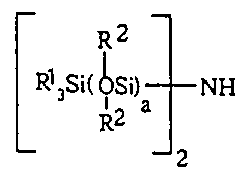 in which R¹ R and R³, which may be identical or different, denote a monovalent formula: C1 to C4 hydrocarbon group and a is an integer between 0 and 50;
ii) the oil a) is injected into the extruder in the place furthest upstream, whereas the polysilazane d) is introduced downstream into the extruder after the constituents a), b) and c) have already been introduced into the extruder;
iii) the polysilazane d) is introduced into the extruder in two distinct places HMDZ1 and HMDZ2, HMDZ2 being situated downstream of HMDZ1;
iv) the extruder screws do not comprise any kneading components between the place where the silica is introduced and the place HMDZ1;
v) the average residence time of the bulk of the constituents in the extruder is between 20 seconds and 10 minutes.

2. Process according to Claim 1, characterized in that the polysilazane d) is a disilazane.

3. Process according to Claim 2, characterized in that the disilazane is chosen especially from divinyltetramethyldisilazane and hexamethyldisilazane.

4. Process according to any one of Claims 1 to 3, characterized in that 35 to 70 % by weight of the quantity of polysilazane is introduced at HMDZ1, the remainder of the quantity of polysilazane being introduced at HMDZ2, situated downstream of HMDZ1.

5. Process according to any one of the preceding claims, characterized in that the average residence time of the bulk of the constituents in the extruder is between 30 seconds and 5 minutes.

6. Process according to any one of the preceding claims, characterized in that the following are injected into the extruder per 100 parts by weight of the oil a):
- 0.5 to 8 parts of water b),
- 20 to 80 parts of silica c),
- 3 to 20 parts of polysilazane d).

7. Process according to any one of the preceding claims, characterized in that the oil a) has a viscosity at 25°C of between 100 and 50 000 mPa s.

8. Process according to any one of the preceding claims, characterized in that the L/D ratio is between 20 and 45, L denoting the length of each screw of the extruder and D their diameter, both expressed in the same units.

9. Process according to Claim 8, characterized in that the L/D ratio is between 25 and 35.

10. Process according to any one of the preceding claims, characterized in that the circumferential velocity of the extruder screws is between 0.2 and 1.2 m/s.

11. Process according to Claim 10, characterized in that the circumferential velocity of the extruder screws is between 0.6 and 1 m/s.

12. Process according to any one of the preceding claims, characterized in that the dough obtained is devolatilized.
